# EUROPEAN PATENT APPLICATION

(11) **EP 1 777 449 A1**
(43) Date of publication of application: **25.04.2007**
(21) Application number: 06122719.5
(22) Date of filing: 20.10.2006
(51) Int. Cl.: F16L 41/04

(54) **Joint for connecting a branch pipe to a main pipe carrying a fluid**

(30) Priority: 20.10.2005 IT BS20050124
(71) Applicant: Greiner S.p.A., 25065 Lumezzane S. Sebastiano BS (IT)
(72) Inventor: Lena, Roberto; c/o Greiner S.p.A., 25065 Lumezzane S. Sebastiano (Brescia) (IT); Brunetti, Battista; c/o Greiner S.p.A., 25065 Lumezzane S. Sebastiano (Brescia) (IT); Astori, Giorgio; c/o Greiner S.p.A., 25065 Lumezzane S. Sebastiano (Brescia) (IT)
(74) Representative: Crippa, Paolo Ernesto

(57) **Abstract**

A joint (10) for connecting a utility branch pipe (11) to a fluid carrying main pipe, comprises, into a hollow body (12) having a central portion (13) from which there extend a first end (14) for the connection to the main pipe, a second end (15) for the connection to the branch pipe (11), and a third end (16), opposite and aligned with the first one, for the connection to a pipe punching device, a shutting device (19) turnable between an open position that allows the passage of said pipe punching device through said hollow body and a closed position that intercepts the passage of said fluid from the main pipe.

## Description

The object of the present invention is a joint for connecting a branch pipe, for example for a utility, to a main pipe transporting a fluid, for example a gas.

In a fluid distribution system, for example a gas, it is known to connect a branch pipe to a main pipe carrying said fluid by making a radial opening in the main pipe and connecting the branch pipe to the opening by a joint, also known as "T-joint for intaking under pressure".

Said joint usually exhibits a T shaped body defining a first end suitable for being fixed, for example by welding or screwing, to the main pipe, a second end for the connection to the branch pipe and a third end, opposite the first one, suitable for the connection of a pipe punching device. This pipe punching device is provided with a miller that, passing through the body of the joint, makes the radial opening into the main pipe.

One of the problems found in making the connection arises from the fact that, once the miller has made the opening into the main pipe, the fluid therein escapes from the joint when the pipe punching device is disconnected.

To obviate such disadvantage, the use of flow intercepting valves has been proposed, for example ball or blade valves, to be mounted between the pipe punching device and the joint, or special intercepting devices such as stoppers or shutting balls, used for making the by-passes required for preventing the flow interruption during the operation. However, such solutions imply greater complexity and therefore higher cost of the joint, an increase of the overall dimensions of the device and the need of providing the miller of the pipe punching device with a certain length which should keep into account the joint height added to the intercepting valve height.

The object of the present invention, on the other hand, is to obviate the disadvantage of fluid leaks from the joint in a simpler, less expensive and safer manner.

The object is achieved by a joint according to the following claims.

Further details and advantages of the joint will appear more clearly from the following description of a preferred embodiment thereof, made by way of an indicative non-limiting example with reference to the annexed drawings, wherein:

figure 1 shows an exploded perspective view of the joint according to the invention;

figure 1a shows the assembled joint;

figure 2 shows a section view of the assembled joint arranged on a main pipe prior to the punching operation;

figure 3 shows a section view of the joint during the punching operation;

figure 4 shows the joint in intercepting position during the punching miller removal;

figure 5 shows the joint in closed position after the main pipe punching device removal;

Figure 6 shows the joint in operating position;

figure 7 shows an exploded perspective view of the joint in a preferred embodiment; and

figure 8 shows the joint of figure 7 assembled.

The joint, globally indicated with reference numeral 10, is designed for connecting a branch pipe, for example for a utility - not shown - to a main pipe 40 for the distribution of a fluid, for example a gas.

In accordance with an embodiment illustrated in the drawings, the branch pipe is connected, for example by welding, mechanical tightening joints, or other systems, to a joint joint pipe 11, for example of polyethylene, which extends from the joint 10.

The joint 10 comprises a hollow body 12 substantially shaped as a "T". Said body 12 in fact has a central portion 13 from which there extend a first end 14 for the connection to the main pipe, a second end 15 from which joint joint pipe 11 extends, and a third end 16, opposite and aligned with the first one, suitable for connecting to a pipe punching device 50 (partly represented with a dashed line in figures 3 and 4) having a miller 51 suitable for making a radial opening 52 in the main pipe 40 for placing the utility branch pipe in communication with said main pipe 40.

In other words, the first and third end 14, 16 of body 12 are aligned along an axis X substantially orthogonal to the main pipe. The second end 15 extends along an axis Y substantially orthogonal to said axis X.

The first end 14 is suitable for being fixed to the main pipe by welding or, like in the example shown, by screwing to a sleeve 60 arranged about the main pipe.

In accordance with a preferred embodiment especially suitable for the gas distribution field, the second end 15 is shaped as a cylindrical sleeve welded to the central portion 13 of the joint and having the free end 15' shaped so as to receive joint pipe 11 to be connected to the branch pipe by gripping. Said end 15 is for example shaped as saw tooth, or as fish bone. In the case of gas distribution, said joint pipe 11 is for example made of polyethylene.

Advantageously, inside said joint pipe 11 there is inserted a bush 29, for example of brass, which by radially enlarging joint pipe 11, allows gripping thereof to the shaped end 15', thereby preventing an extraction thereof and ensuring the seal. The seal is further ensured by the presence of an o-ring 29'.

In accordance with a preferred embodiment illustrated in figures 7 and 8, inside the cylindrical sleeve 15 there is further provided a gas stopping device 17 that triggers automatically interrupting the gas flow in the case of leaks downstream of said device. In this embodiment, the cylindrical sleeve 15 exhibits a greater extension for seating said stopping device. Advantageously, in fact, the insertion of the gas stopping device 17 into end 15, rather than inside joint pipe 11, allows obtaining a smaller passage section and thereby minimise load losses.

According to the invention, a seat 18 for a ball gate 19 is obtained in the central portion 13 of the joint body. Said ball gate 19 is turnably and sealingly seated in seat 18 by annular seals 20.

The ball gate 19 is crossed by a diametrical passage 21 and by at least one radial or side passage 22 obtained perpendicular to said diametrical passage 21.

The third end 16 of body 12 of the joint 10 is defined by a tang fixed to body 12, for example by screwing and/or welding, subsequent to the insertion of the ball gate 19 into the joint.

A plug 23, removably fixed for example by screwing, is inserted into tang 16. Tang and plug are further overlapped by a protection cap 24. More in detail, plug 23 and cap 24 are associated to respective sealing elements 23', 24' that ensure a double seal on the third end 16 of the joint. In fact, if for example there is a leak from plug 23, seal 24' of cap 24 intervenes.

The ball gate 19 is turnable by an operating stem 25 that engages said gate along a direction perpendicular to axis X. Advantageously, stem 25 and thereby the ball gate 19 are turnable about axis Y. More in detail, stem 25 controls the ball gate 19 to rotate between a position of open joint (figures 2, 3, 6), which allows punching the main pipe and placing said main pipe in communication with joint pipe 11, and a position of closed joint (figures 4 and 5), which blocks the escape of fluid from the main pipe and allows removing the pipe punching device.

In the open joint position, the diametrical passage 21 extends along axis X and is aligned with the two opposite ends 14, 16; in the closed joint position, said diametrical passage 21 orientates perpendicular to said axis X closing the fluid passage along such direction.

The radial or side passage 22 is always open and aligned with the second end 15 of body 12.

The control stem 25 is turnably seated in a hollow appendix 26 that extends from the central portion 13 of body 12, in opposite direction relative to the second end 15 of connection to the utility branch pipe. Opposite the ball gate 19, stem 25 exhibits an end 27 protruding from appendix 26 and suitable for being engaged by an operating wrench or lever - not shown. When it must not be actuated, stem 25 is protected by a cap 28 that screws into the hollow appendix 26.

Advantageously, stem 25 is associated to at least one, preferably two seals 25' of the o-ring type and a further flat seal 25" that, besides the seal, also has the function of anti-friction between stem 25 and the seat thereof, obtained in the hollow appendix 26.

In accordance with an embodiment illustrated in the drawings, an elastic pin 30 is further radially inserted in stem 25, suitable for defining the travel end positions during the opening and closing operations of gate 19. In fact, said elastic pin 30 is free to move inside a slot 31, of width for example equal to 90°, obtained in the hollow appendix 26.

Finally, the joint may be made of either steel or brass.

To connect the utility to the main pipe, the joint 10 is first fixed to the main pipe, for example by welding or screwing of the first end 14 to sleeve 60 (figure 2). The branch pipe of a utility is then connected to joint pipe 11 of the joint 10.

A pipe punching device 50 is then sealingly applied to tang 16 of the joint, after having removed the protection cap 24 and plug 23 (figure 3). The control stem 25 is turned so that the ball gate 19 is oriented to the open joint position.

In this configuration, the miller of the pipe punching device may be made to advance so as to pass through tang 16, the diametrical passage 21 of the ball and the first end 14, up to reach the main pipe surface. At this point, the miller can make opening 52 into main pipe 40.

Once said opening has been made, the miller is withdrawn towards the pipe punching device. Before this is removed from the joint, the ball gate is turned to closed position, so that the fluid into the main pipe cannot reach the second or the third end of the joint (figure 4).

Only after this closing operation has been carried out, the pipe punching device 50 can be disconnected from the joint. Once plug 23 and the protection cap 24 have been applied (figure 5), stem 25 can be actuated for turning the ball gate to the open position for the normal use of the joint (figure 6).

In order to meet standards that do not allow the presence of threaded connections in underground gas distribution systems, once the punching has been made and the branch pipe has been realised, moreover, plug 23 should be sealed by welding on tang 16.

It should be noted that the branch pipe may be connected to the joint even after making the punching. However, in this case, a device must be provided for plugging joint pipe 11, for example the application of a joint with plug, for preventing the fluid from escaping from said pipe once the punching has been made.

Finally, it should be noted that compared to the conventional systems currently on the market, besides aiding the charging step the joint proposed herein, in particular in the version with automatic safety device, increases the system safety level itself in the event of occurrence of leaks due to accidental (excavations, etc.) or natural causes (landslides, landslips, etc.).

It is evident that a man skilled in the art may make several changes and adjustments to the joint according to the present invention in order to meet specific and incidental needs, all falling within the scope of protection of the invention as defined in the annexed claims.

For example, further embodiments of the joint comprise several possible connection methods that can be made on end 15, among which:

- with connection for welding polyethylene pipe (like in figure 1);

- with threaded connection for steel pipe connection;

- with connection for welding steel pipe;

All the versions listed above may be made with the seat for the gas stopping device 17.

## Claims

1. A joint (10) for connecting a utility branch pipe to a main pipe carrying a fluid, comprising a hollow body (12) having a central portion (13) from which there extend a first end (14) for the connection to the main pipe, a second end (15) for the connection to the branch pipe, and a third end (16), opposite and aligned with the first one, for the connection to a pipe punching device having a miller suitable for being inserted into said hollow body of the joint up to reaching said main pipe, **characterised in that** in said central portion (13) of the joint body there is sealingly seated a shutting device (19) turnable between an open position that allows the passage of said miller through said hollow body and a closed position that intercepts the passage of said fluid from the main pipe at least towards said third end of the joint.

2. A joint according to claim 1, wherein said first and third ends of said hollow body extend along an axis (X) substantially orthogonal to the main pipe and wherein said second end extends along an axis (Y) substantially perpendicular to said axis (X).

3. A joint according to claim 1 or 2, wherein said shutting device is a ball gate (19) crossed by a diametrical passage (21) and by at least one radial or side passage (22).

4. A joint according to claim 3, wherein said radial or side passage (22) is obtained perpendicular to said diametrical passage (21).

5. A joint according to any one of the previous claims, wherein the gate (19) is turnable by an operating stem (25) turnably seated in a hollow appendix (26) that extends from the central portion 13 of the body (12).

6. A device according to claim 5, wherein said stem (25) engages said gate along a direction perpendicular to the axis (X) along which the first and the third end of the hollow body extend.

7. A device according to claim 5 or 6, wherein the stem (25) is associated to at least one seal (25') of the o-ring type and a further flat seal (25") that, besides the seal, also has the function of anti-friction between the stem (25) and the seat thereof obtained in the hollow appendix (26).

8. A device according to any one of claims 5 to 7, wherein an elastic pin (30) is radially inserted in the stem (25) suitable for defining the travel end positions during the opening and closing operations of the gate (19).

9. A device according to any one of the previous claims, wherein a joint pipe (11) extends from said second end (15) of the hollow body, having a free end suitable for the branch pipe connection.

10. A device according to claim 9, wherein said joint pipe (11) is of polyethylene.

11. A device according to claim 9 or 10, wherein said second end (15) ends with a portion (15') shaped so as to receive said joint pipe (11) for the connection to the branch pipe by gripping.

12. A device according to claim 11, wherein a bush (29) is inserted in said joint pipe (11), suitable for radially enlarging said pipe for a gripping thereof to said shaped portion (15').

13. A device according to any one of the previous claims, wherein an automatic gas stopping device (17) is seated in said second end (15).

14. A device according to any one of the previous claims, wherein said first end (14) of the hollow body (12) is suitable for being fixed by welding to the main pipe (40).

15. A device according to any one of claims 1 to 13, wherein said first end (14) of the hollow body (12) is suitable for being fixed by screwing to a sleeve (60) arranged about the main pipe (40).

16. A device according to any one of the previous claims, wherein the third end (16) of the hollow body (12) comprises a tang fixed to said body (12) by screwing and/or welding, and wherein a plug (23) is inserted in said tang (16).

17. A device according to claim 16, wherein tang (16) and plug (23) are overlapped by a protection cap (24) with the interposition of sealing means (23', 24') suitable for ensuring a dual seal on the third end (16) of the hollow body (12).

18. A method for connecting a utility branch pipe to a main pipe carrying a fluid, comprising the steps of:
- arranging a joint (10) according to any one of the previous claims, orienting the gate (19) to open position;
- fixing the joint (10) to the main pipe;
- connecting the branch pipe to the joint;
- removing the protection cap (24) and the plug (23) from the third end (16) of the joint;
- sealingly applying a pipe punching device (50) to said third end;
- making the main pipe punching;
- retracting the miller towards the pipe punching device, beyond the gate;
- turning the gate to closed position;
- disconnecting the pipe punching device from the joint;
- applying the plug (23) and the protection cap (24) to the joint;
- turning the gate to open position for the normal use of the joint.
